(19) Europäisches Patentamt
European Patent Office
Office européen des brevets

(11) EP 0 643 083 B1

(12) **FASCICULE DE BREVET EUROPEEN**

(45) Date de publication et mention de la délivrance du brevet:
**14.05.1997 Bulletin 1997/20**

(51) Int Cl.6: **C08F 283/12**, G02B 1/04

(21) Numéro de dépôt: **94402007.2**

(22) Date de dépôt: **09.09.1994**

(54) **Matériau hydrophile,transparent à haute perméabilité à l'oxygène, à base d'un polymère à réseaux interpénétrés, son mode de préparation et fabrication de lentilles de contact souples à haute perméabilité à l'oxygène.**

Hydrophiles, durchsichtiges Material mit hoher Sauerstoffdurchlässigkeit auf der Basis von interpenetrierenden Polymernetzwerken, Verfahren zur Herstellung und Herstellung von weichen hochsauerstoffdurchlässigen Kontaktlinsen

Hydrophilic, transparent material with high oxygen permeability containing interpenetrating polymer networks, process for preparing it and manufacture of soff contact lenses with high oxygen permeability

(84) Etats contractants désignés:
**AT CH DE DK FR GB IT LI NL SE**

(30) Priorité: **10.09.1993 FR 9310763**

(43) Date de publication de la demande:
**15.03.1995 Bulletin 1995/11**

(73) Titulaire: **ESSILOR INTERNATIONAL (COMPAGNIE GENERALE D'OPTIQUE)**
**F-94227 Charenton cédex (FR)**

(72) Inventeurs:
- **Robert, Catherine**
  **F- 95880 Enghien-les-Bains (FR)**
- **Bunel, Claude**
  **F-76240 Bihorel (FR)**
- **Vairon, Jean-Pierre**
  **F-92340 Bourg-la-Reine (FR)**

(74) Mandataire: **Casalonga, Axel**
**BUREAU D.A. CASALONGA - JOSSE**
**Morassistrasse 8**
**80469 München (DE)**

(56) Documents cités:
**FR-A- 2 270 289**
**FR-A- 2 465 236**
**US-A- 4 062 627**

EP 0 643 083 B1

Il est rappelé que: Dans un délai de neuf mois à compter de la date de publication de la mention de la délivrance du brevet européen, toute personne peut faire opposition au brevet européen délivré, auprès de l'Office européen des brevets. L'opposition doit être formée par écrit et motivée. Elle n'est réputée formée qu'après paiement de la taxe d'opposition. (Art. 99(1) Convention sur le brevet européen).

## Description

La présente invention concerne un matériau hydrophile, transparent, à haute perméabilité à l'oxygène, constitué d'un polymère à réseaux de polymères interpénétrés (IPN), son procédé de préparation. L'invention concerne en particulier la fabrication de lentilles de contact souples à haute perméabilité à l'oxygène.

Les lentilles de contact à base de silicone sont bien connues pour leur très haute perméabilité à l'oxygène. Mais leur caractère hydrophobe et la mobilité de leurs chaînes provoquent des interactions rapides et fortes avec les lipides lacrymaux, entraînant une déshydratation et une adhésion potentielle à la cornée de l'oeil.

L'absence d'hydrophilie entraîne l'absence de mouillabilité de la surface des lentilles et provoque la rupture du film lacrymal. Or, le film lacrymal produit par la cornée de l'oeil humain, permet de protéger celle-ci contre l'abrasion par les lentilles de contact. Il doit être maintenu intact pour assurer une bonne vision sans distorsion. Sa rupture conduit à des irritations et à une diminution rapide du temps de port de la lentille.

Diverses techniques ont été proposées dans l'état de la technique pour pallier à ces inconvénients et rendre les lentilles de silicone compatibles en surface avec l'oeil.

On connaît dans le brevet français FR-2.073.034, un procédé pour hydrophiliser en surface des lentilles de contact de silicone qui consiste à gonfler la matrice de silicone à l'aide d'un monomère de type monoester ou monoamide de l'acide acrylique ou méthacrylique, formant un polymère hydrophile. Les lentilles de contact ainsi obtenues présentent un taux très faible de polymère acrylique incorporé sur la surface de la matrice de silicone.

On connaît également dans le brevet français FR-2.270.289, un procédé de fabrication de lentilles souples et transparentes à base d'un polymère à réseaux à interpénétration simultanée (polymère SIN), à partir de prépolymères hydrophobes d'organosiloxanes et de monomères hydrophiles du type monoester ou monoamide d'acide acrylique ou méthacrylique. Le polymère SIN est un polymère dans lequel les prépolymères hydrophobes et les monomères hydrophiles sont mélangés ensemble et réagissent simultanément pour former deux réseaux imbriqués par une polymérisation indépendante des prépolymères hydrophobes et des monomères hydrophiles, respectivement.

La demanderesse a découvert qu'il était possible d'obtenir des lentilles de contact de silicone souples, hydrophiles en masse, transparentes et à haute perméabilité à l'oxygène lorsque celles-ci étaient constituées d'un matériau polymère à deux réseaux interpénétrés, comprenant un réseau hydrophobe de polymère polydiméthylsiloxane (PDMS) et un réseau hydrophile poly(acide acrylique).

De telles lentilles de contact à l'état hydraté sont stables géométriquement, transparentes, améliorent par leur caractère hydrophile le confort du porteur en préservant le film lacrymal précornéen.

La présente invention a pour objet un matériau hydrophile en masse, transparent et perméable à l'oxygène, à base d'un polymère à deux réseaux interpénétrés comprenant un réseau hydrophobe PDMS et un réseau hydrophile poly(acide acrylique).

L'invention concerne également des objets souples, hydrophiles en masse et transparents, en particulier des lentilles de contact souples, obtenues à partir de ces matériaux par hydratation dans de l'eau ou un sérum aqueux physiologique.

Un objet de l'invention concerne le procédé de préparation de ces matériaux hydrophiles, transparents et perméables à l'oxygène.

D'autres objets apparaîtront à la lumière de la description et des exemples qui suivent.

Les matériaux hydrophiles en masse, transparents et perméables à l'oxygène selon l'invention, sont constitués d'un polymère à deux réseaux interpénétrés, comprenant :

(1) une matrice hydrophobe de polydiméthylsiloxane mis en forme; et
(2) un réseau hydrophile de poly(acide acrylique) polymérisé dans la matrice de silicone à partir d'une solution d'acide acrylique contenant un agent de réticulation.

La matrice de polydiméthylsiloxane est préparée en particulier par réticulation d'une composition constituée :

a) d'une huile A contenant :

- 100 parties en poids d'huile de diorganosiloxane de formule :

$$CH_2 = CHSi(CH_3)_2O\text{-}[Si(CH_3)_2O]_{n'}\,Si(CH_3)_2\,CH = CH_2 \qquad (1)$$

dans laquelle n' a une valeur telle que la viscosité de l'huile soit comprise entre 500 et 5000 centipoises à 25°C;

- 25 à 40 parties en poids d'un copolymère constitué des motifs de formules :

$$(CH_3)_3\ SiO_{0,5} \qquad (2)$$

$$(CH_3)CH_2 = CHSiO \qquad (3)$$

et

$$SiO_2 \qquad (4)$$

le rapport du nombre de motifs de formules (2) et (3) sur le nombre de motifs $SiO_2$ varie de 0,6 à 1,1;

b) d'une huile B constituée d'un hydrogénométhylpolysiloxane de formule moyenne :

$$(CH_3)_{b'}\ H_{c'}\ SiO_{\frac{4-b'-c'}{2}} \qquad (5)$$

dans laquelle b' représente un nombre entre 0,9 et 1,6 et c' un nombre entre 0,45 et 0,85, dans une quantité suffisante de manière à obtenir 0,8 à 1,9 liaisons SiH pour une liaison $SiCH = CH_2$;

c) d'un catalyseur à base de platine.

Une telle composition est décrite dans le brevet US 4.062.627, ainsi que les conditions de mise en oeuvre pour préparer la matrice de polydiméthylsiloxane.

On utilise plus particulièrement à titre de composition pour préparer la matrice en polydiméthylsiloxane le produit vendu sous la dénomination RTV-70-141 (SILBIONE ®) par la Société RHONE POULENC.

Le polymère de silicone formant la matrice hydrophobe du matériau de l'invention est mis en forme et transformé selon l'application souhaitée.

Pour la fabrication des lentilles de contact souples, hydrophiles en masse, on prépare comme matrice de silicone une lentille de contact de polydiméthylsiloxane.

Les matériaux conformes à la présente invention conduisent après hydratation dans de l'eau ou un sérum aqueux physiologique, à des objets souples, hydrophiles en masse, transparents, en particulier à des lentilles de contact souples.

Ces matériaux contiennent préférentiellement une quantité de polymère hydrophile poly(acide acrylique) incorporé dans la matière de silicone, comprise entre 5 et 35% en poids par rapport au poids du polymère IPN final.

Pour des proportions comprises entre 5 et 25% en poids par rapport au poids du matériau final, le polymère à réseaux interpénétrés final, à l'état hydraté, présente une transparence stable dans le temps. De telles proportions permettent ainsi d'obtenir des lentilles de contact adaptées pour une longue utilisation.

Pour des proportions en poly(acide acrylique) incorporé supérieures à 25% en poids, on obtient des lentilles de contact dont la transparence est plus limitée dans le temps.

L'agent de réticulation utilisé pour la polymérisation du poly(acide acrylique) est choisi de préférence parmi les polyesters de l'acide acrylique ou méthacrylique et de polyalcools, en particulier parmi le diméthacrylate d'éthylèneglycol, le diméthacrylate de diéthylèneglycol, le diméthacrylate de triéthylèneglycol, le diméthacrylate de tétraéthylèneglycol, le diméthacrylate de polyéthylèneglycol, le diméthacrylate de 1,4-butylèneglycol, le diméthacrylate de 1,3-butylèneglycol et le triméthacrylate de 1,1,1-triméthylolpropane.

Les objets souples, hydrophiles, selon l'invention, présentent un coefficient $D_k$ de perméabilité à l'oxygène très élevé, à savoir supérieur à

$$\frac{100 \times 10^{-11}\ cm^3\ (O_2)\ .\ cm}{cm^2.\ s.\ mmHg}$$

à 35°C.

Les matériaux hydrophiles en masse et transparents selon l'invention, sont préparés selon le procédé comprenant les étapes suivantes :

a) on effectue une diffusion et un gonflement d'un matériau en polydiméthylsiloxane dans une solution d'acide acrylique contenant au moins un agent de réticulation et un agent photo-initiateur et éventuellement un solvant mixte de l'acide acrylique et du polydiméthylsiloxane;
b) on effectue ensuite une polymérisation de l'acide acrylique dans la matrice de silicone par irradiation aux ultraviolets.

L'agent de réticulation tel que défini ci-dessus, est utilisé préférentiellement en des quantités comprises entre 0,2 et 4% en poids par rapport à l'acide acrylique.

Une forme particulière de l'invention consiste à diluer l'acide acrylique dans un solvant choisi de préférence parmi l'hexane, le toluène ou le chloroforme, dans lequel l'acide acrylique a une concentration de préférence inférieure ou égale à 50% en poids.

L'addition d'un tel solvant dans la solution d'acide acrylique permet d'augmenter, dans les conditions de concentration définies ci-dessus, le pourcentage de poly(acide acrylique) hydrophile incorporé dans la matrice de silicone et d'améliorer l'homogénéité du polymère IPN final.

On utilise de manière préférentielle, à titre de solvant, l'hexane.

L'agent photo-initiateur est choisi de préférence parmi les composés de formule (I) :

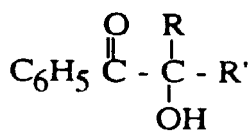

(I)

dans laquelle R et R', identiques ou différents, désignent un atome d'hydrogène, un radical aryle ou alkyle ou un groupe OR" où R" désigne un hydrogène, un radical aryle ou alkyle.

Les radicaux alkyle comportent de préférence 1 à 5 atomes de carbone. Le radical aryle est par exemple phényle.

On utilise plus particulièrement l'hydroxy-2méthyl-2 phényl-1 propanone vendu sous la dénomination DAROCUR 1173 par la Société MERCK.

L'agent photo-initiateur est utilisé de préférence dans des quantités comprises entre 0,01 et 10% en poids par rapport à l'acide acrylique, de préférence entre 1 et 2%.

Des lentilles de contact souples hydrophiles, présentant de bonnes caractéristiques optiques et une haute perméabilité à l'oxygène, sont obtenues selon le procédé de l'invention à partir de lentilles rigides hydrophobes en polydiméthylsiloxane tel que défini ci-dessus et après hydratation du produit obtenu dans de l'eau ou un sérum aqueux physiologique couramment utilisé pour les lentilles de contact.

Le taux de gonflement (% $H_2O$) des lentilles ainsi obtenues est directement lié au pourcentage en poly(acide acrylique) hydrophile incorporé dans la matrice de silicone.

Pour les pourcentages de poly(acide acrylique) incorporé inférieurs à 30% en poids, par rapport au poids du polymère IPN final, le taux de gonflement est pratiquement égal à ce pourcentage.

L'équilibre d'hydratation des lentilles est atteint très rapidement (24 heures) avec une masse hydratée constante.

Leur coefficient $D_k$ de perméabilité à l'oxygène est supérieur à

$$\frac{100 \times 10^{-11}\ cm^3\ (O_2)\ .\ cm}{cm^2.\ s.\ mmHg}$$

à 35°C.

Les exemples qui suivent servent à illustrer l'invention sans toutefois présenter un caractère limitatif.

**EXEMPLES**

## I. NATURE DE LA MATRICE SILICONE ET SYNTHESE

### 1. Nature de la matrice silicone

Cette matrice est obtenue par réticulation à partir de substrats en silicone (type RTV synthétisés par RHONE POULENC), à l'aide de catalyseurs à base de platine en mélangeant deux huiles A et B comprenant, d'une part, des

polydiméthylsiloxanes vinyliques et, d'autre part, un hydrogéno-organopolysiloxane en quantité suffisante pour avoir de 0,8 à 1,9 liaisons SiH pour une liaison $SiCH=CH_2$.

**2. Préparation des disques silicone**

On utilise la composition organopolysiloxanique suivante :

- 78 g d'huile de diméthylsiloxane bloquée à chaque extrémité par un motif de formule :

$$(CH_3)_2\ CH_2 = CH\ SiO_{0,5}$$

de viscosité 1000 centipoises à 25°C;

- 25 g de copolymère constitué des motifs de formules :

$$(CH_3)_3\ SiO_{0,5}$$

$$(CH_3)CH_2 = CH\ SiO$$

$$SiO_2,$$

répartis dans le rapport numérique 2,3/0,4/3,5;

- 5,5 g de copolymère constitué des motifs de formules :

$$(CH_3)_2\ H\ SiO_{0,5}\ \text{et}\ SiO_2$$

respectivement, répartis dans le rapport numérique 2/1;

- 0,001 g de platine sous forme soluble dans l'alcool octylique.

<u>Mode opératoire</u> :

- Les moules en polypropylène sont conçus dans le but d'obtenir des disques de 0,2 mm d'épaisseur et 10 mm de diamètre. Ces moules sont préalablement nettoyés dans du dichlorométhane (ultra-sons : 5 minutes), puis séchés à 60°C pendant 16 heures.
- La composition organopolysiloxanique est dégazée sous vide pendant 5 minutes puis filtrée sur filtre MINISART-NML. La composition est à nouveau dégazée sous vide 5 minutes.
- 0,05 g de composition organopolysiloxanique sont déposés sur les parties concaves des moules, qui sont ensuite placées sous vide pour la dernière étape de dégazage (3 à 4 minutes).
- Les convexes sont placés sur les concaves.
- La composition organopolysiloxanique est polymérisée en étuve ventilée 8 heures à 64°C et 15 heures à 83°C.
- Les disques sont démoulés en déposant quelques gouttes de dichlorométhane sur le silicone, et conditionnés dans des capsules en polypropylène. Les disques sont extraits dans du dichlorométhane pendant 1 heure, puis séchés pendant 3 heures à 80°C.

Les échantillons sont prêts pour subir les traitements chimiques.

## II. DEMARCHE EXPERIMENTALE SUIVIE :

Les travaux ont été réalisés sur des disques de silicone (type RTV) de 10 mm de diamètre et 0,2 mm d'épaisseur, préalablement préparés selon le mode opératoire décrit dans le chapitre I.

Un disque de masse m est plongé pendant un temps t dans une solution contenant :

- l'acide acrylique préalablement distillé,
- un solvant mixte de l'acide acrylique et du silicone : l'hexane (en proportions variables),
- un réticulant : l'éthylèneglycoldiméthacrylate (EGDMA),
- un amorceur photochimique : l'hydroxy-2-méthyl 2-phényl 1-propanone vendu sous la dénomination "DAROCUR 1173", dont la formule est la suivante :

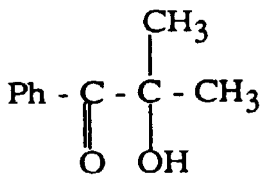

Quand l'équilibre de diffusion est atteint (t), l'échantillon est essuyé et placé entre deux lames de verre recouvertes d'un film de polyéthylène (afin d'éviter l'adhésion du PAA sur le verre). La source d'irradiation est une lampe à vapeur de mercure (100 W) et le condenseur utilisé est constitué de deux lentilles en silice, conçu de façon à obtenir un faisceau homogène. Le réglage optique est réalisé dans le but d'obtenir un faisceau parallèle.

Une rotation continue de l'échantillon permettra d'irradier alternativement chaque face du disque.

Après polymérisation, l'échantillon est extrait dans du chloroforme, puis séché et sa masse m' déterminée. D'après les valeurs de m et m', nous pouvons calculer le pourcentage de poly(acide acrylique) (PAA) incorporé :

$$\% \text{ PAA} = \frac{m' - m}{m'} \times 100$$

Toutefois, une certaine quantité d'acide acrylique a polymérisé à la surface du disque. Ce polymère peut être éliminé par extraction dans l'eau distillée. Après déshydratation, la nouvelle masse m'' du disque est déterminée, ainsi que la quantité réelle de PAA incorporé et la quantité de PAA polymérisé en surface, extraite dans l'eau.

Les taux d'hydratation seront déterminés après gonflement dans de l'eau distillée ou du sérum physiologique (masse hydratée = $m_H$) d'après la relation :

$$\% \ H_2O = \frac{m_H - m''}{m_H} \times 100$$

Après stérilisation 30 minutes à 121 °C, les mesures de perméabilité à l'oxygène sont effectuées.

## III. RESULTATS EXPERIMENTAUX

### 1. Relations entre le pourcentage d'acide acrylique en solution et la quantité de poly(acide acrylique) incorporé et coefficients de perméabilité à l'oxygène obtenus.

Des expériences ont été réalisées pour des concentrations massiques d'acide acrylique allant de 7 à 75% dans l'hexane.

Le pourcentage d'EGDMA est constant pour cette série d'expériences et égal à 0,25% (par rapport à la quantité d'acide acrylique). Le pourcentage de DAROCUR est de 2%. Les temps de diffusion sont de 5 minutes et les temps d'irradiation sont de 10 minutes.

Les résultats obtenus sont recensés dans le tableau 1.

**Tableau 1** : Influence du pourcentage d'acide acrylique dans l'hexane sur la quantité de poly(acide acrylique) incorporé dans le silicone.

| % AA en solution dans hexane | % PAA incorporé dans silicone | Aspect (état hydraté) | Dk ($10^{-11}$x $cm^3$ ($O_2$).cm $cm^2$.s.mmHg) |
|---|---|---|---|
| 7 | 7,5 | Transparent | > 100 |
| 10 | 9 | " | > 100 |
| 14 | 14 | " | > 100 |
| 18 | 18 | " | > 100 |
| 20 | 19 | " | > 100 |
| 25 | 19 | " | > 100 |
| 30 | 26 | " | > 100 |
| 36 | 23 | " | > 100 |
| 40 | 26,5 | " | > 100 |
| 45 | 28 | " | > 100 |
| 50 | 25 | " | > 100 |
| 75 | 25,4 | " | > 100 |

**PROPRIETES OPTIQUES** :

- Les échantillons obtenus sont légèrement diffusants à l'état sec (bleutés), mais deviennent transparents au cours de l'hydratation et le sont toujours à l'équilibre de gonflement.
- Lors de l'irradiation, une certaine quantité d'acide acrylique polymérise à la surface du disque. Ce PAA est extrait par gonflement dans de l'eau distillée. Nous avons remarqué que plus la proportion d'hexane est importante, moins il y a de PAA en surface et plus l'échantillon est homogène. Ainsi, dans le cas des solutions contenant 30% d'acide acrylique, la quantité de PAA incorporé est la même que pour 50% d'acide acrylique, mais l'échantillon est beaucoup plus homogène et plus plan et la quantité de PAA en surface éliminé est plus faible.

D'après ces résultats, on peut tracer % PAA = f (AA) : **graphe 1**, et on constate que dans ces conditions le pourcentage de PAA incorporé est maximum pour des teneurs en acide acrylique supérieures à 40%.

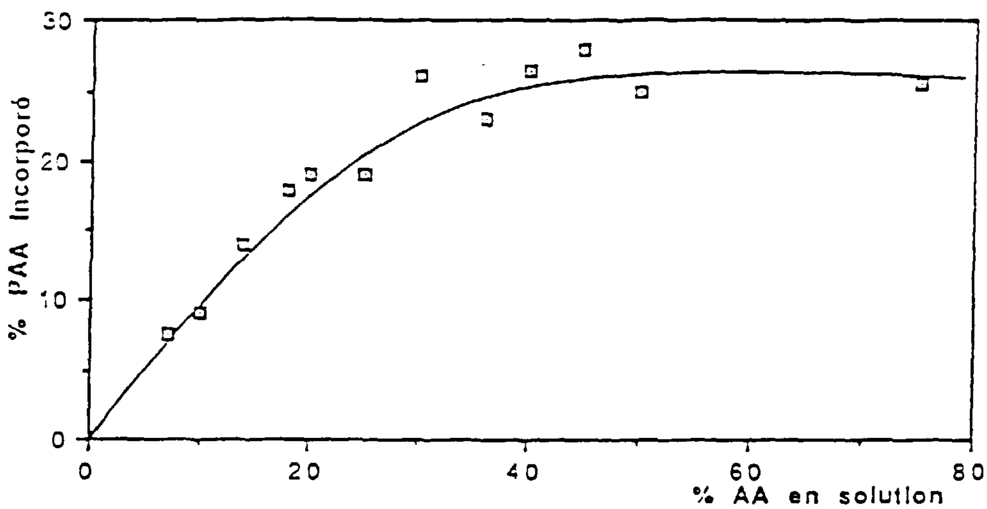


**Graphe 1 : Relation entre la teneur en acide acrylique dans l'hexane et le pourcentage de PAA incorporé dans le silicone.**

**2. Influence du taux de gonflement en fonction du pourcentage de PAA incorporé dans le silicone.**

On a tracé % $H_2O$ = f (% PAA) : **graphes 2 et 3**.

On a étudié l'évolution du pourcentage d'hydratation de la lentille en fonction du pourcentage de poly(acide acrylique) incorporé respectivement après 30 jours et après 45 jours d'hydratation.

## Graphe 2

## % $H_2O$ = f (% PAA) après 30 jours

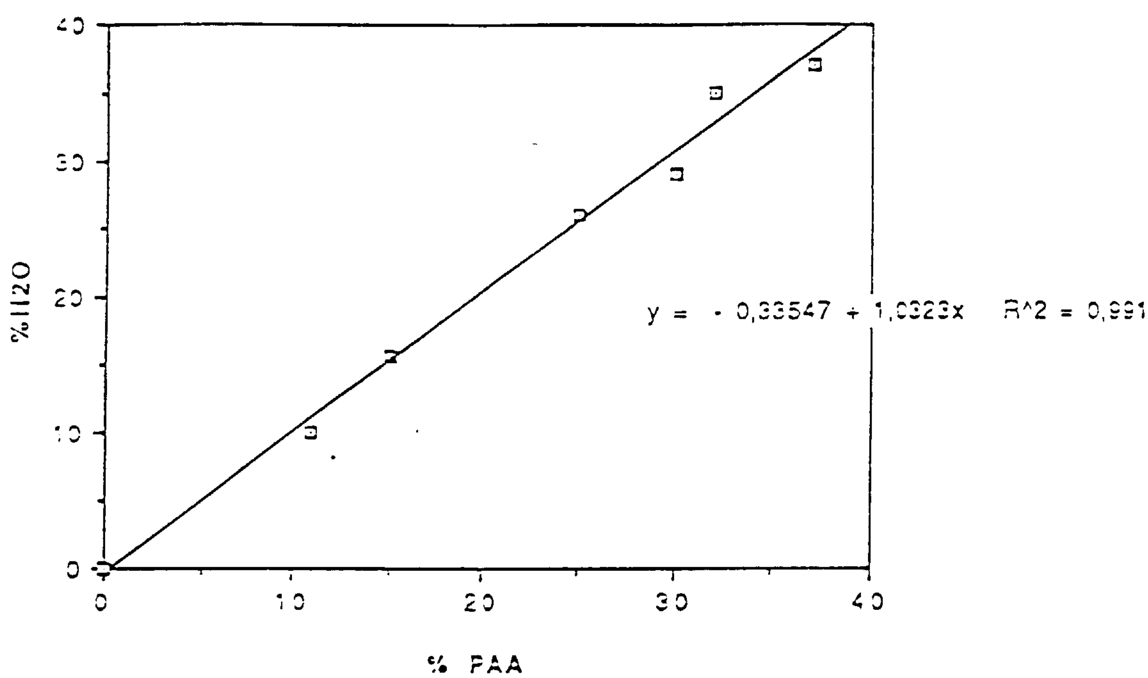

## Graphe 3

### % $H_2O$ = f (% PAA) après 30 et 45 jours d'hydratation

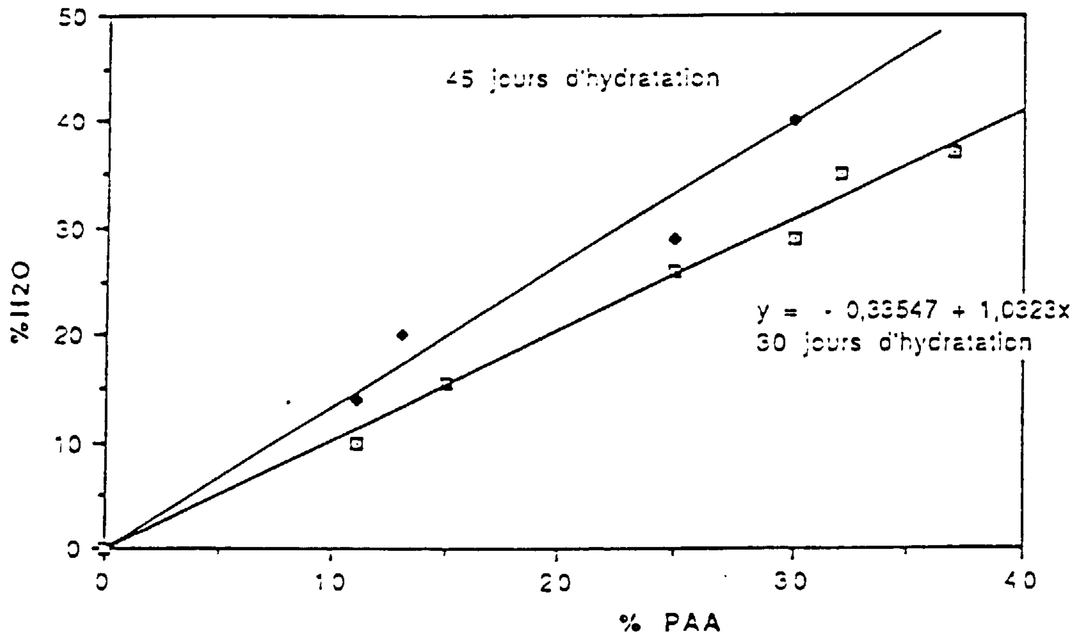


Après 30 jours d'hydratation, pour des taux de PAA inférieurs à 30%, le pourcentage d'hydratation est pratiquement égal au pourcentage de PAA.

Après 45 jours d'hydratation, on n'observe plus la même variation linéaire entre le pourcentage d'eau et le pourcentage de PAA. Le taux d'hydratation augmente par rapport au pourcentage de PAA.

L'évolution du pourcentage d'hydratation en fonction du temps a été suivie pour des échantillons contenant 9 et 25% de PAA (provenant respectivement de solution de gonflement contenant 10 et 50% d'acide acrylique dans l'hexane) : **tableau 2.**

| | temps (mn) | 0 | 15 | 75 | 180 | 1200 | 1560 | 2880 | 4320 |
|---|---|---|---|---|---|---|---|---|---|
| 9% PAA | % H2O | 0 | 2 | 6 | 8 | 9 | 9 | 10 | 10 |
| 25% PAA | % H2O | 0 | 9 | 17 | 20 | 24 | 24 | 25,5 | 26 |

**Tableau 2** : Evolution de la masse lors de l'hydratation pour des échantillons contenant 9 et 25% de PAA.

On trace sur un même graphe % $H_2O$ = f (t) pour deux compositions en poly(acide acrylique) : **graphe 4**.

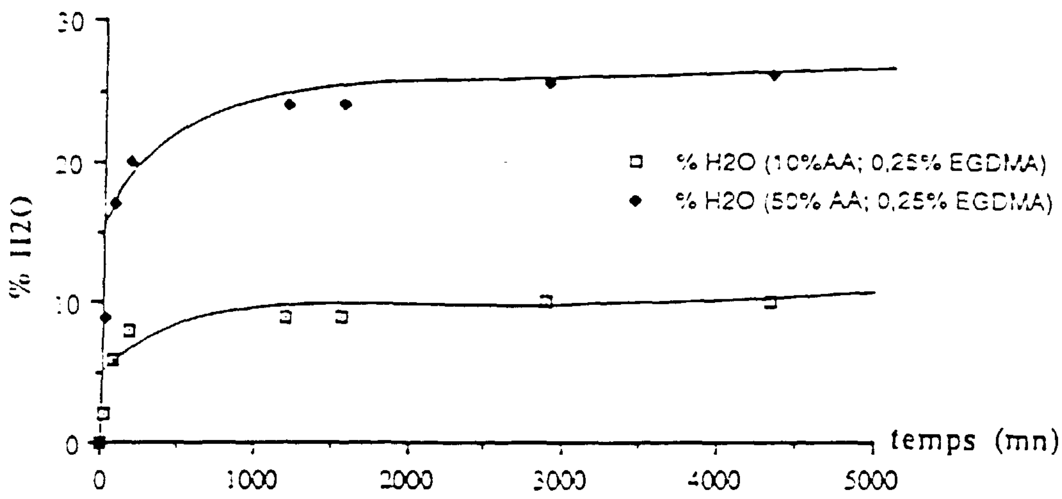


**Graphe 4 : Evolution du pourcentage d'hydratation en fonction du temps pour (% AA)i = 10 et 50% ou (% PAA) = 9 et 25%.**

Dans les deux cas, l'équilibre est atteint très rapidement (24 heures, seul le pourcentage d'eau à l'équilibre varie.

**3. Influence de la nature du solvant dans la solution de gonflement sur le pourcentage de PAA incorporé dans le silicone.**

La composition étudiée est la suivante :

- 50% d'acide acrylique dans le solvant,
- 2% de photoinitiateur DAROCUR par rapport à l'acide acrylique,
- 0,25% d'agent de réticulation par rapport à l'acide acrylique.

On utilise dans chaque composition l'hexane, le toluène ou le chloroforme.
On teste, à titre de témoin, une composition ne contenant pas de solvant (100% AA).
Les résultats sont indiqués dans le tableau 3.

Tableau 3

| SOLVANT | % PAA | Dk | Gonflement volumique % |
|---|---|---|---|
| HEXANE | 31 % | > 100 | 62 % |
| TOLUENE | 27 % | > 100 | 51 % |
| CHLOROFORME | 24 % | > 100 | 37 % |
| SANS SOLVANT | 11 - 15 % | > 100 | 16 % |

Le pourcentage de PAA incorporé est directement lié au gonflement en volume de la lentille dans le mélange acide acrylique/solvant. Les gonflements volumiques ont été déterminés à partir des masses de l'échantillon à l'état sec et gonflé, du fait que la densité du silicone et de l'acide acrylique sont proches de 1.

On constate que le mélange hexane/acide acrylique conduit à des gonflements volumiques plus élevés par rapport aux autres mélanges contenant le toluène ou le chloroforme.

D'autre part, le gonflement dans l'acide acrylique seul est nettement plus faible par rapport à un mélange solvant/ acide acrylique.

## Revendications

1. Matériau hydrophile en masse, transparent, perméable à l'oxygène, à base d'un polymère à deux réseaux interpénétrés, caractérisé par le fait qu'il est constitué :

   (1) d'une matrice en polymère hydrophobe polydiméthylsiloxane mis en forme; et
   (2) d'un réseau hydrophile de poly(acide acrylique) polymérisé dans la matrice de silicone à partir d'une solution d'acide acrylique contenant un agent de réticulation.

2. Matériau selon la revendication 1, caractérisé par le fait que la matrice de polydiméthylsiloxane est obtenue par réticulation d'une composition constituée :

   a) d'une huile A contenant :

   . 100 parties en poids d'huile de diorganosiloxane de formule :

$$CH_2 = CHSi(CH_3)_2O\text{-}[Si(CH_3)_2O]_{n'}\ Si(CH_3)_2\ CH = CH_2 \qquad (1)$$

   dans laquelle n' a une valeur telle que la viscosité de l'huile soit comprise entre 500 et 5000 centipoises à 25°C;

   . 25 à 40 parties en poids d'un copolymère constitué des motifs de formules :

$$(CH_3)_3\ SiO_{0,5} \qquad (2)$$

$$(CH_3)CH_2 = CHSiO \qquad (3)$$

   et

$$SiO_2 \qquad (4)$$

   le rapport du nombre de motifs de formules (2) et (3) sur le nombre de motifs $SiO_2$ varie entre 0,6 et 1,1;

   b) d'une huile B constituée d'un hydrogénométhylpolysiloxane de formule moyenne :

$$(CH_3)_{b'}\ H_{c'}\ SiO_{\frac{4-b'-c'}{2}} \qquad (5)$$

   dans laquelle b' représente un nombre entre 0,9 et 1,6 et c' un nombre entre 0,45 et 0,85, dans une quantité suffisante de manière à obtenir 0,8 à 1,9 liaisons SiH pour une liaison $SiCH = CH_2$;

   c) d'un catalyseur à base de platine.

3. Matériau selon la revendication 1 ou 2, caractérisé par le fait qu'il contient une proportion en polymère poly(acide acrylique) incorporé dans la matrice de silicone, comprise entre 5 et 35% en poids par rapport au poids du matériau.

4. Matériau selon l'une quelconque des revendications 1 à 3, caractérisé par le fait que la quantité de poly(acide acrylique) incorporé dans la matrice de silicone, est comprise entre 5 et 25% en poids par rapport au poids du matériau.

5. Matériau selon l'une quelconque des revendications 1 à 4, caractérisé par le fait que l'agent de réticulation est choisi parmi les polyesters de l'acide acrylique ou méthacrylique et de polyalcools.

**6.** Objet souple, transparent, hydrophile en masse, à haute perméabilité à l'oxygène, susceptible d'être obtenu par hydratation dans l'eau ou dans un sérum physiologique aqueux d'un matériau tel que défini selon l'une quelconque des revendications 1 à 5.

**7.** Objet selon la revendication 6, caractérisé par le fait qu'il consiste en une lentille de contact.

**8.** Objet selon l'une quelconque des revendications 6 à 7, caractérisé par le fait qu'il présente un coefficient de perméabilité à l'oxygène $D_k$ supérieur à

$$\frac{100 \times 10^{-11}\ cm^3\ (O_2)\ .\ cm}{cm^2 .\ s.\ mmHg}$$

à 35°C.

**9.** Procédé de préparation d'un matériau façonné tel que défini selon l'une quelconque des revendications 1 à 7, caractérisé par le fait qu'il comprend les étapes suivantes :

a) on effectue une diffusion et un gonflement d'un matériau en polydiméthylsiloxane dans une solution d'acide acrylique contenant au moins un agent de réticulation, un agent photo-initiateur et éventuellement un solvant mixte de l'acide acrylique et du polydiméthylsiloxane;
b) on effectue une polymérisation de l'acide acrylique par irradiation ultraviolette.

**10.** Procédé selon la revendication 9, caractérisé par le fait que l'agent de réticulation est présent dans des proportions comprises entre 0,2 et 4% en poids par rapport au monomère acide acrylique.

**11.** Procédé selon la revendication 9 ou 10, caractérisé par le fait que l'agent de réticulation est choisi parmi le diméthacrylate d'éthylèneglycol, le diméthacrylate de diéthylèneglycol, le diméthacrylate de triéthylèneglycol, le diméthacrylate de tétraéthylèneglycol, le diméthacrylate de polyéthylèneglycol, le diméthacrylate de 1,4-butylèneglycol, le diméthacrylate de 1,3-butylèneglycol et le triméthacrylate de 1,1,1-triméthylolpropane.

**12.** Procédé selon l'une quelconque des revendications 9 à 11, caractérisé par le fait que la solution d'acide acrylique comprend un solvant mixte de l'acide acrylique et du polydiméthylsiloxane, dans lequel l'acide acrylique est présent dans des quantités inférieures ou égales à 50% en poids.

**13.** Procédé selon la revendication 12, caractérisé par le fait que le solvant est choisi parmi l'hexane, le chloroforme ou le toluène.

**14.** Procédé selon la revendication 13, caractérisé par le fait que le solvant est l'hexane.

**15.** Procédé selon l'une quelconque des revendications 9 à 14, caractérisé par le fait que l'agent photo-initiateur est choisi parmi les composés de formule (I) :

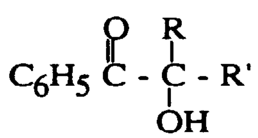

(I)

dans laquelle R et R', identiques ou différents, désignent un atome d'hydrogène, un radical aryle ou alkyle ou un groupe OR'' où R'' est un atome d'hydrogène, un radical aryle ou alkyle.

**16.** Procédé selon la revendication 15, caractérisé par le fait que l'agent photo-initiateur est l'hydroxy-2 méthyl-2 phényl-1 propanone.

**17.** Procédé selon la revendication 15 ou 16, caractérisé par le fait que l'agent photo-initiateur est utilisé dans des quantités comprises entre 0,01 et 10% en poids par rapport à l'acide acrylique.

**18.** Procédé selon l'une quelconque des revendications 9 à 17, caractérisé par le fait que le matériau de l'étape a) est constitué d'une lentille de contact en polydiméthylsiloxane.

**19.** Procédé selon la revendication 18, caractérisé par le fait que le polymère polydiméthylsiloxane est obtenu par réticulation d'une composition constituée :

a) d'une huile A contenant :

. 100 parties en poids d'huile de diorganosiloxane de formule :

$$CH_2 = CHSi(CH_3)_2O\text{-}[Si(CH_3)_2O]_{n'}\ Si(CH_3)_2\ CH = CH_2 \qquad (1)$$

dans laquelle n' a une valeur telle que la viscosité de l'huile soit comprise entre 500 et 5000 centipoises à 25°C;

. 25 à 40 parties en poids d'un copolymère constitué des motifs de formules :

$$(CH_3)_3\ SiO_{0,5} \qquad (2)$$

$$(CH_3)CH_2 = CHSiO \qquad (3)$$

et

$$SiO_2 \qquad (4)$$

le rapport du nombre de motifs de formules (2) et (3) sur le nombre de motifs $SiO_2$ varie entre 0,6 et 1,1;

b) d'une huile B constituée d'un hydrogénométhylpolysiloxane de formule moyenne :

$$(CH_3)_{b'}\ H_{c'}\ SiO_{\frac{4-b'-c'}{2}} \qquad (5)$$

dans laquelle b' représente un nombre entre 0,9 et 1,6 et c' un nombre entre 0,45 et 0,85, dans une quantité suffisante de manière à obtenir 0,8 à 1,9 liaisons SiH pour une liaison $SiCH = CH_2$;

c) d'un catalyseur à base de platine.

**20.** Lentille de contact souple, hydrophile en masse, à haute perméabilité à l'oxygène, susceptible d'être obtenue par le procédé tel que défini selon la revendication 18 ou 19, et par hydratation du produit obtenu dans de l'eau ou un sérum physiologique aqueux.

**21.** Lentille de contact selon la revendication 20, caractérisée par le fait qu'elle présente un coefficient de perméabilité à l'oxygène $D_k$ supérieur à

$$\frac{100 \times 10^{-11}\ cm^3\ (O_2)\ .\ cm}{cm^2 .\ s.\ mmHg}$$

à 35°C.

**Patentansprüche**

1. In seiner Gesamtheit hydrophiles, durchsichtiges, sauerstoffdurchlässiges Material auf Basis eines Polymers mit zwei sich gegenseitig durchdringenden Netzwerken, dadurch gekennzeichnet, daß es zusammengesetzt ist aus:

   (1) einer geformten Matrix aus hydrophobem Polydimethylsiloxanpolymer und
   (2) einem hydrophilen Polyacrylsäurenetzwerk, welches in die Silikonmatrix, ausgehend von einer ein Vernetzungsmittel enthaltenden Acrylsäurelösung, polymerisiert ist.

2. Material nach Anspruch 1, dadurch gekennzeichnet, daß die Polydimethylsiloxanmatrix durch Vernetzung einer Zusammensetzung, bestehend aus:

   a) einem Öl A, enthaltend:

   - 100 Gewichtsteile eines Diorganosiloxanöls der Formel:

$$CH_2{=}CHSi(CH_3)_2O{-}[Si(CH_3)_2O]_{n'}Si(CH_3)_2CH{=}CH_2 \quad (1)$$

     in welcher n' einen derartigen Wert aufweist, daß die Viskosität des Öles zwischen 500 und 5.000 Centipoise bei 25 °C beträgt;
   - 25 bis 40 Gewichtsteile eines Copolymers, bestehend aus den Formelmustern:

$$(CH_3)_3SiO_{0,5} \quad (2)$$

$$(CH_3)CH_2{=}CHSiO \quad (3)$$

     und

$$SiO_2 \quad (4)$$

     wobei das Verhältnis der Anzahl der Formelmuster (2) und (3) in bezug auf die Anzahl der Muster $SiO_2$ zwischen 0,6 und 1,1 variiert; b) einem Öl B, bestehend aus einem Wasserstoffmethylpolysiloxan der mittleren Formel:

$$(CH_3)_{b'}H_{c'}SiO_{\frac{4-b'-c'}{2}} \quad (5)$$

     in welcher b' eine Zahl zwischen 0,9 und 1,6 und c' eine Zahl zwischen 0,45 und 0,85 darstellt, in einer ausreichenden Menge, um 0,8 bis 1,9 SiH-Bindungen für eine $SiCH{=}CH_2$-Bindung zu erhalten;

   c) einem Katalysator auf Platinbasis, erhalten wird.

3. Material nach Anspruch 1 oder 2, dadurch gekennzeichnet, daß es einen Anteil zwischen 5 und 35 Gew.-% an Polyacrylsäurepolymer, in die Silikonmatrix, in bezug auf das Gewicht des Materials, inkorporiert, enthält.

4. Material nach einem der Ansprüche 1 bis 3, dadurch gekennzeichnet, daß die in die Silikonmatrix inkorporierte Menge an Polyacrylsäure zwischen 5 und 25 Gew.-% in bezug auf das Gewicht des Materials umfaßt.

5. Material nach einem der Ansprüche 1 bis 4, dadurch gekennzeichnet, daß das Vernetzungsmittel aus den Acrylsäure- oder Methyacrylsäurepolyestern und den Polyalkoholen gewählt ist.

6. Weicher, durchsichtiger, in seiner Gesamtheit hydrophiler Gegenstand mit hoher Sauerstoffdurchlässigkeit, welcher fähig ist, durch Hydratation in Wasser oder physiologischem, wässrigem Serum aus einem Material, wie es in einem der Ansprüche 1 bis 5 definiert ist, erhalten zu werden.

**7.** Gegenstand nach Anspruch 6, dadurch gekennzeichnet, daß er aus einer Kontaktlinse besteht.

**8.** Gegenstand nach einem der Ansprüche 6 oder 7, dadurch gekennzeichnet, daß er einen Sauerstoffdurchlässigkeitskoeffizient $D_k$ über

$$\frac{100 \times 10^{-11}\ cm^3\ (O_2).\ cm}{cm^2.s.\ mmHg}$$

bei 35 °C aufweist.

**9.** Verfahren zur Herstellung eines Materials, wie es in einem der Ansprüche 1 bis 7 definiert ist, dadurch gekennzeichnet, daß es die folgenden Schritte umfaßt:

a) es wird eine Diffusion und ein Quellen eines Polydimethylsiloxanmaterials in einer Acrylsäurelösung, enthaltend wenigstens ein Vernetzungsmittel, ein Fotoinitiatormittel und gegebenenfalls ein gemischtes Lösungsmittel aus Acrylsäure und Polydimethylsiloxan, durchgeführt;

b) es wird eine Polymerisation der Acrylsäure durch Ultraviolett-Bestrahlung durchgeführt.

**10.** Verfahren nach Anspruch 9, dadurch gekennzeichnet, daß das Vernetzungsmittel in Mengen zwischen 0,2 und 4 Gew.-% in bezug auf das Acrylsäuremonomer vorhanden ist.

**11.** Verfahren nach Anspruch 9 oder 10, dadurch gekennzeichnet, daß das Vernetzungsmittel aus Ethylenglykoldimethacrylat, Diethylenglykoldimethacrylat, Triethylenglykoldimethacrylat, Tetraethylenglykoldimethacrylat, Polyethylenglykoldimethacrylat, 1,4-Butylenglykoldimethacrylat, 1,3-Butylenglykoldimethacrylat und 1,1,1-Trimethylolpropantrimethacrylat gewählt ist.

**12.** Verfahren nach einem der Ansprüche 9 bis 11, dadurch gekennzeichnet, daß die Acrylsäurelösung ein aus Acrylsäure und Polydimethylsiloxan gemischtes Lösungsmittel enthält, in welchem die Acrylsäure in Mengen unter oder gleich 50 Gew.-% enthalten ist.

**13.** Verfahren nach Anspruch 12, dadurch gekennzeichnet, daß das Lösungsmittel aus Hexan, Chloroform oder Toluol gewählt ist.

**14.** Verfahren nach Anspruch 13, dadurch gekennzeichnet, daß das Lösungsmittel Hexan ist.

**15.** Verfahren nach einem der Ansprüche 9 bis 14, dadurch gekennzeichnet, daß das Fotoinitiatormittel aus den Verbindungen der Formel I

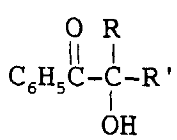

(I)

in welchen R und R' gleich oder verschieden sind und ein Wasserstoffatom, ein Aryl- oder Alkylradikal oder eine Gruppe OR" bedeuten, worin R" ein Wasserstoff oder ein Aryl- oder Alkylradikal ist.

**16.** Verfahren nach Anspruch 15, dadurch gekennzeichnet, daß das Fotoinitiatormittel 2-Hydroxy-2-methyl-1-phenylpropanon ist.

**17.** Verfahren nach einem der Ansprüche 15 oder 16, dadurch gekennzeichnet, daß das Fotoinitiatormittel in Mengen zwischen 0,01 und 10 Gew.-% in bezug auf die Acrylsäure verwendet wird.

**18.** Verfahren nach einem der Ansprüche 9 bis 17, dadurch gekennzeichnet, daß das Material von Schritt a) aus einer Kontaktlinse aus Polydimethylsiloxan gebildet wird.

**19.** Verfahren nach Anspruch 18, dadurch gekennzeichnet, daß das Polydimethylsiloxanpolymer durch Vernetzung einer Zusammensetzung, bestehend aus:

a) einem Öl A, enthaltend:

- 100 Gewichtsteile eines Diorganosiloxanöls der Formel:

$$CH_2{=}CHSi(CH_3)_2O{-}[Si(CH_3)_2O]_{n'}Si(CH_3)_2CH{=}CH_2 \quad (1)$$

in welcher n' einen derartigen Wert aufweist, daß die Viskosität des Öles zwischen 500 und 5.000 Centipoise bei 25 °C beträgt;
- 25 bis 40 Gewichtsteile eines Copolymers, bestehend aus den Formelmustern:

$$(CH_3)_3SiO_{0,5} \quad (2)$$

$$(CH_3)CH_2{=}CHSiO \quad (3)$$

und

$$SiO_2 \quad (4)$$

wobei das Verhältnis der Anzahl der Formelmuster (2) und (3) in bezug auf die Anzahl der Muster $SiO_2$ zwischen 0,6 und 1,1 variiert;

b) einem Öl B, bestehend aus einem Wasserstoffmethylpolysiloxan der mittleren Formel:

$$(CH_3)_{b'}H_{c'}SiO_{\frac{4-b'-c'}{2}} \quad (5)$$

in welcher b' eine Zahl zwischen 0,9 und 1,6 und c' eine Zahl zwischen 0,45 und 0,85 darstellt, in einer ausreichenden Menge, um 0,8 bis 1,9 SiH-Bindungen für eine $SiCH{=}CH_2$-Bindung zu erhalten;

c) einem Katalysator auf Platinbasis, erhalten wird.

**20.** Weiche, in ihrer Gesamtheit hydrophile Kontaktlinse mit hoher Sauerstoffdurchlässigkeit, welche mit dem Verfahren, wie es in Anspruch 18 oder 19 definiert ist und durch Hydratation des erhaltenen Produktes in Wasser oder wässrigem, physiologischem Serum, erhalten werden kann.

**21.** Kontaktlinse nach Anspruch 20, dadurch gekennzeichnet, daß sie einen Sauerstoffdurchlässigkeitskoeffizienten $D_K$ über

$$\frac{100 \times 10^{-11}\ cm^3\ (O_2).\ cm}{cm^2.s.\ mmHg}$$

bei 35 °C aufweist.

**Claims**

1. Oxygen-permeable, transparent, bulk hydrophilic material based on a polymer containing two interpenetrating networks, characterized in that it consists:

   (1) of a matrix made from a shaped hydrophobic polydimethylsiloxane polymer; and
   (2) of a hydrophilic poly(acrylic acid) network polymerized in the silicone matrix from an acrylic acid solution containing a crosslinking agent.

2. Material according to Claim 1, characterized in that the polydimethylsiloxane matrix is obtained by crosslinking a composition consisting:

   a) of an oil A containing:

   - 100 parts by weight of diorganosiloxane oil of formula:

   $$CH_2 = CHSi(CH_3)_2O\text{-}[Si(CH_3)_2O]_{n'}\ Si(CH_3)_2\ CH = CH_2 \qquad (1)$$

     in which n' has a value such that the viscosity of the oil is between 500 and 5000 centipoises at 25°C;
   - 25 to 40 parts by weight of a copolymer consisting of the units of formulae:

   $$(CH_3)_3SiO_{0.5} \qquad (2)$$

   $$(CH_3)CH_2{=}CHSiO \qquad (3)$$

     and

   $$SiO_2 \qquad (4)$$

     the ratio of the number of units of formulae (2) and (3) to the number of $SiO_2$ units varies between 0.6 and 1.1;

   b) of an oil B consisting of a hydrogenmethylpolysiloxane of mean formula:

   $$(CH_3)_{b'}H_{c'}\ SiO_{\frac{4-b'-c'}{2}} \qquad (5)$$

   in which b' represents a number between 0.9 and 1.6 and c' a number between 0.45 and 0.85, in an amount which is sufficient to obtain 0.8 to 1.9 SiH bonds per $SiCH{=}CH_2$ bond;
   c) and of a platinum-based catalyst.

3. Material according to Claim 1 or 2, characterized in that it contains a proportion of poly(acrylic acid) polymer incorporated in the silicone matrix of between 5 and 35 weight % with respect to the weight of the material.

4. Material according to any one of Claims 1 to 3, characterized in that the amount of poly(acrylic acid) incorporated in the silicone matrix is between 5 and 25 weight % with respect to the weight of the material.

5. Material according to any one of Claims 1 to 4, characterized in that the crosslinking agent is chosen from polyesters of acrylic or methacrylic acid and of polyalcohols.

6. Bulk hydrophilic, transparent, soft object with a high permeability to oxygen capable of being obtained by hydration in water or in an aqueous physiological serum of a material as defined according to any one of Claims 1 to 5.

**7.** Object according to Claim 6, characterized in that it consists of a contact lens.

**8.** Object according to either of Claims 6 and 7, characterized in that it has an oxygen-permeability coefficient Dk greater than

$$\frac{100 \times 10^{-11}\ cm^3\ (O_2)\ .\ cm}{cm^2.\ s.\ mmHg}$$

at 35°C.

**9.** Process for the preparation of a shaped material as defined according to any one of Claims 1 to 7, characterized in that it comprises the following stages:

a) a polydimethylsiloxane material is diffused and swollen in an acrylic acid solution containing at least one crosslinking agent, one photoinitiating agent and optionally one mixed solvent of the acrylic acid and of the polydimethylsiloxane;
b) the acrylic acid is polymerized by ultraviolet radiation.

**10.** Process according to Claim 9, characterized in that the crosslinking agent is present in proportions of between 0.2 and 4 weight % with respect to the acrylic acid monomer.

**11.** Process according to Claim 9 or 10, characterized in that the crosslinking agent is chosen from ethylene glycol dimethacrylate, diethylene glycol dimethacrylate, triethylene glycol dimethacrylate, tetraethylene glycol dimethacrylate, polyethylene glycol dimethacrylate, 1,4-butylene glycol dimethacrylate, 1,3-butylene glycol dimethacrylate and 1,1,1-trimethylolpropane trimethacrylate.

**12.** Process according to any one of Claims 9 to 11, characterized in that the acrylic acid solution comprises a mixed solvent of the acrylic acid and of the polydimethylsiloxane in which the acrylic acid is present in amounts less than or equal to 50 weight %.

**13.** Process according to Claim 12, characterized in that the solvent is chosen from hexane, chloroform or toluene.

**14.** Process according to Claim 13, characterized in that the solvent is hexane.

**15.** Process according to any one of Claims 9 to 14, characterized in that the photoinitiating agent is chosen from the compounds of formula (I):

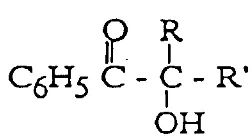

(I)

in which R and R', which are identical or different, denote a hydrogen atom, an aryl or alkyl radical or an OR" group where R" is a hydrogen atom or an aryl or alkyl radical.

**16.** Process according to Claim 15, characterized in that the photoinitiating agent is 2-hydroxy-2-methyl-1-phenylpropanone.

**17.** Process according to Claim 15 or 16, characterized in that the photoinitiating agent is used in amounts of between 0.01 and 10 weight % with respect to the acrylic acid.

**18.** Process according to any one of Claims 9 to 17, characterized in that the material of stage a) consists of a polydimethylsiloxane contact lens.

**19.** Process according to Claim 18, characterized in that the polydimethylsiloxane polymer is obtained by crosslinking a composition consisting:

a) of an oil A containing:

- 100 parts by weight of diorganosiloxane oil of formula:

$$CH_2 = CHSi(CH_3)_2O\text{-}[Si(CH_3)_2O]_{n'} Si(CH_3)_2\ CH = CH_2 \qquad (1)$$

  in which n' has a value such that the viscosity of the oil is between 500 and 5000 centipoises at 25°C;
- 25 to 40 parts by weight of a copolymer consisting of the units of formulae:

$$(CH_3)_3SiO_{0.5} \qquad (2)$$

$$(CH_3)CH_2{=}CHSiO \qquad (3)$$

  and

$$SiO_2 \qquad (4)$$

  the ratio of the number of units of formulae (2) and (3) to the number of $SiO_2$ units varies between 0.6 and 1.1;

b) of an oil B consisting of a hydrogen-methylpolysiloxane of mean formula:

$$(CH_3)_{b'}H_{c'}\ SiO_{\frac{4-b'-c'}{2}} \qquad (5)$$

in which b' represents a number between 0.9 and 1.6 and c' a number between 0.45 and 0.85, in an amount which is sufficient to obtain 0.8 to 1.9 SiH bonds per $SiCH{=}CH_2$ bond;
c) and of a platinum-based catalyst.

**20.** Bulk hydrophilic, soft contact lens with a high permeability to oxygen capable of being obtained by the process as defined according to Claim 18 or 19 and by hydration of the product obtained in water or an aqueous physiological serum.

**21.** Contact lens according to Claim 20, characterized in that it has an oxygen-permeability coefficient Dk greater than

$$\frac{100 \times 10^{-11}\ cm^3\ (O_2)\ .\ cm}{cm^2\ .\ s.\ mmHg}$$

at 35°C.